(19) Europäisches Patentamt / European Patent Office / Office européen des brevets

(11) **EP 3 304 240 B1**

(12) **FASCICULE DE BREVET EUROPEEN**

(45) Date de publication et mention
de la délivrance du brevet:
**25.09.2019 Bulletin 2019/39**

(21) Numéro de dépôt: **16726835.8**

(22) Date de dépôt: **24.05.2016**

(51) Int Cl.:
**H02M 1/42** *(2007.01)*    **H02M 1/32** *(2007.01)*

(86) Numéro de dépôt international:
**PCT/EP2016/061696**

(87) Numéro de publication internationale:
**WO 2016/189001 (01.12.2016 Gazette 2016/48)**

(54) **CONVERTISSEUR DE PUISSANCE ET RESEAU ELECTRIQUE ASSOCIE**

STROMWANDLER UND ZUGEHÖRIGE STROMNETZ

POWER CONVERTER AND ASSOCIATED ELECTRICAL GRID

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.05.2015 FR 1501093**

(43) Date de publication de la demande:
**11.04.2018 Bulletin 2018/15**

(73) Titulaire: **Thales
92400 Courbevoie (FR)**

(72) Inventeurs:
- **MOREL, Benoit
  29200 Brest (FR)**
- **LE BARS, David
  29200 Brest (FR)**
- **STEPHAN, Hervé
  29200 Brest (FR)**

(74) Mandataire: **Lucas, Laurent Jacques et al
Marks & Clerk France
Conseils en Propriété Industrielle
Immeuble Visium
22, Avenue Aristide Briand
94117 Arcueil Cedex (FR)**

(56) Documents cités:
**US-A- 5 969 962**

- **SALOMONSSON D ET AL: "Low-Voltage DC
  Distribution System for Commercial Power
  Systems With Sensitive Electronic Loads", IEEE
  TRANSACTIONS ON POWER DELIVERY, IEEE
  SERVICE CENTER, NEW YORK, NY, US, vol. 10,
  no. 3, 1 juillet 2007 (2007-07-01), pages 1620-1627,
  XP011186623, ISSN: 0885-8977**
- **HIROAKI KAKIGANO ET AL: "Low-Voltage
  Bipolar-Type DC Microgrid for Super High Quality
  Distribution", IEEE TRANSACTIONS ON POWER
  ELECTRONICS, INSTITUTE OF ELECTRICAL
  AND ELECTRONICS ENGINEERS, USA, vol. 25,
  no. 12, 1 décembre 2010 (2010-12-01), pages
  3066-3075, XP011343841, ISSN: 0885-8993, DOI:
  10.1109/TPEL.2010.2077682**
- **SALOMONSSON D ET AL: "Protection of
  Low-Voltage DC Microgrids", IEEE
  TRANSACTIONS ON POWER DELIVERY, IEEE
  SERVICE CENTER, NEW YORK, NY, US, vol. 24,
  no. 3, 1 juillet 2009 (2009-07-01), pages 1045-1053,
  XP011268511, ISSN: 0885-8977, DOI:
  10.1109/TPWRD.2009.2016622**
- **CAIROLI P ET AL: "Controlled power sequencing
  for fault protection in DC nanogrids", CLEAN
  ELECTRICAL POWER (ICCEP), 2011
  INTERNATIONAL CONFERENCE ON, IEEE, 14
  juin 2011 (2011-06-14), pages 730-737,
  XP032056668, DOI: 10.1109/ICCEP.2011.6036384
  ISBN: 978-1-4244-8929-9**

EP 3 304 240 B1

**Description**

La présente invention concerne le domaine de l'électronique de puissance et notamment celui des systèmes électriques connectés aux réseaux de distribution d'énergie. La présente invention concerne plus particulièrement un convertisseur de puissance et un réseau électrique associé.

L'invention peut trouver son application dans des réseaux de distribution électrique comme par exemple ceux embarqués dans les moyens de transport notamment dans les domaines aéronautique, automobile ou ferroviaire. Ces réseaux permettent d'alimenter différents appareils nécessitant des tensions continues à partir d'une source de tension alternative comprenant au moins une phase.

Dans les réseaux électriques, l'alimentation doit adresser plusieurs sous-ensembles ou consommateurs connectés audit réseau. Un problème se pose lorsqu'un ou plusieurs de ces sous-ensembles se retrouvent en court-circuit. En effet, contrairement aux alimentations ne desservant qu'un seul équipement électrique, l'alimentation ne peut être coupée pour la déconnecter du réseau, par exemple en faisant disjoncter une protection ou fondre un fusible, au risque de couper l'alimentation des autres consommateurs connectés au réseau électrique. Si un consommateur se met en défaut, l'alimentation ne doit pas s'interrompre et doit être capable d'actionner une sécurité configurée pour isoler le consommateur en défaut du réseau.

U.S. Patent 5,969,962 divulgue un convertisseur de puissance du type correcteur de facteur de puissance (PFC).

Un problème des convertisseurs de puissance réalisés à l'aide de correcteur de facteur de puissance régulant son courant de sortie vient du comportement de cette structure de puissance lorsque sa sortie se trouve en court-circuit ou lorsque l'amplitude de la tension de sortie est très faible. En effet, la fonction de transfert d'une telle structure comprend un gain statique proportionnel à l'inverse de la tension de sortie de la structure de puissance.

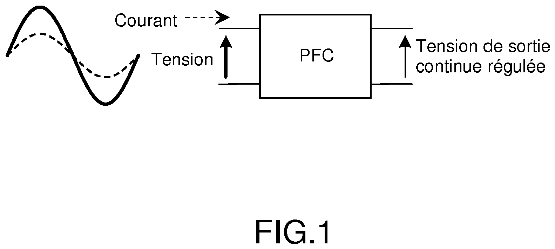

En référence à la figure 1, on rappelle qu'un circuit de conversion alternatif vers continu de type correcteur de facteur de puissance ou PFC pour " *Power Factor Corrector*" selon la terminologie anglo-saxonne, lorsqu'il est connecté sur un réseau alternatif ne perturbe pas, ou très peu, ce dernier. Pour ce faire, le circuit de type « PFC » doit avoir un facteur de puissance le plus proche de l'unité et peu d'harmoniques de courant en entrée. Son courant d'entrée doit être sinusoïdal et en phase avec la tension à son entrée. Vu de son entrée, le convertisseur doit être aussi proche que possible qu'une charge résistive. A cette fin, la structure de puissance comprend une boucle de courant primaire. Le courant d'entrée de la structure de puissance est asservi à un signal de consigne proportionnel à la tension d'entrée de ladite structure de puissance et en reprend donc la forme sinusoïdale. Le contrôle de l'amplitude de ce signal de consigne permet de contrôler l'amplitude du courant absorbé par la structure de puissance. Afin de conserver un gain indépendant de la tension d'entrée entre le signal de commande B et la puissance absorbée par la structure de puissance, le signal de consigne de courant d'entrée, consigne_lin, est usuellement déterminée comme suit :

$$\text{consigne\_lin} = A \times B / C^2$$

Où:

A est un signal proportionnel à la tension d'entrée instantanée, il a donc la forme sinusoïdale de celle-ci,
B est un signal de commande permettant de contrôler la puissance absorbée par la structure de puissance,
C est un signal proportionnel à la valeur efficace de la tension d'entrée de la structure de puissance.

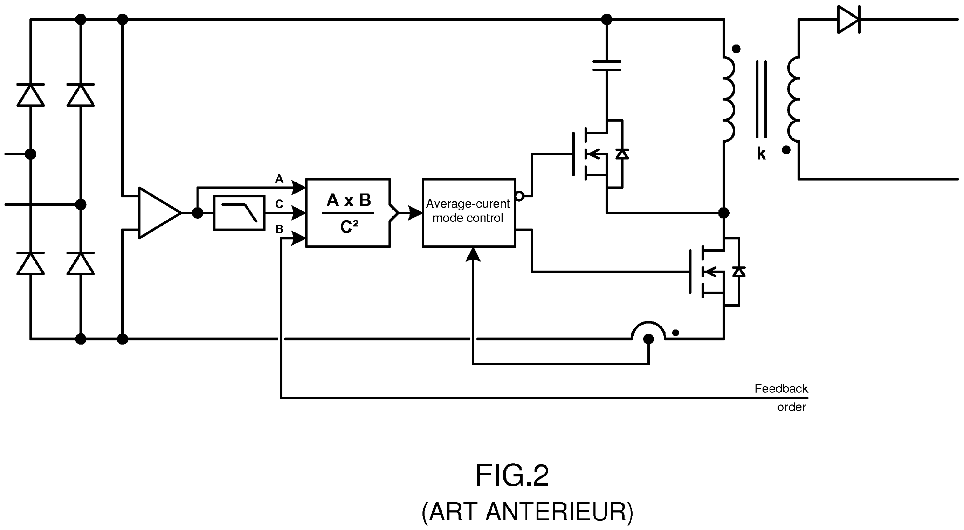

A titre illustratif, la figure 2 représente un exemple de mode de réalisation d'une structure de puissance de type « flyback » connue de l'art antérieur. Soit $U_{in}(t)$ la tension d'entrée, cette tension peut s'écrire sous la forme :

$$U_{in}(t) = U_{eff} \times \sqrt{2} \times \sin(\omega \times t)$$

où $U_{eff}$ représente la valeur efficace de la tension d'entrée.
Suivant les descriptions précédentes, on peut écrire :

$$A = K_1 \times U_{eff} \times \sqrt{2} \times \sin(\omega \times t)$$

$$C = K_2 \times U_{eff}$$

Avec $K_1$ et $K_2$ deux constantes

Si on suppose que le PFC fonctionne correctement, le courant d'entrée I suit sa consigne et donc :

$$I = consigne\_Iin = K_1 \times U_{eff} \times \sqrt{2} \times \sin(\omega \times t) \times B / K_2^2 \times U^2_{eff}$$

On peut donc extraire la valeur efficace du courant d'entrée :

$$I_{eff} = K1 \times B / (K_2^2 \times U_{eff})$$

Le courant et la tension étant en phase, la puissance d'entrée $P_{in}$ peut s'écrire :

$$P_{in} = I_{eff} \times U_{eff} = (K_1/K_2^2) \times B$$

On constate que la puissance d'entrée, et donc la puissance fournie (au rendement près), ne varie que suivant le terme B. Les constantes $K_1$ et $K_2$ étant définies par le circuit de mesure et donc figées lors de la conception, la structure de puissance, incluant la boucle d'asservissement courant primaire fournit donc une puissance de sortie proportionnelle à B.

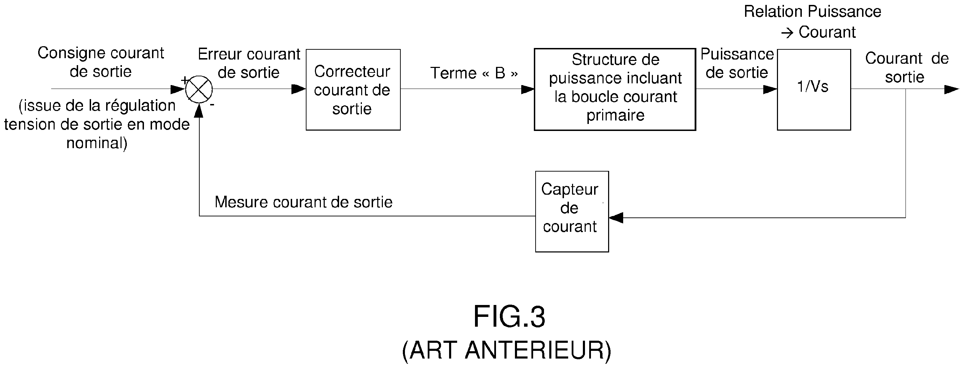

Afin de contrôler précisément le courant de sortie, celui-ci est asservi. La figure 3 représente de façon schématique un exemple de boucle de courant secondaire. En fonctionnement nominal, la consigne de courant de sortie est définie par le correcteur de l'asservissement de la tension de sortie. En cas de fonctionnement sur court-circuit, une valeur fixe correspondant au courant de court-circuit désiré est appliquée.

Le correcteur de l'asservissement courant de sortie contrôlant directement l'entrée « B » de la structure de puissance incluant la boucle courant primaire, il en résulte un contrôle de la puissance de sortie. La relation entre puissance de sortie et courant de sortie fait apparaître un gain proportionnel à l'inverse de la tension de sortie (1/Vs) dans la boucle de courant secondaire. Pour une tension de sortie Vs donnée, le dimensionnement du correcteur de la boucle courant de sortie ne pose pas de problème. En revanche, les critères de stabilité des boucles (marges de gain et phase) ne peuvent être garantis à mesure que la tension baisse. Le gain de la fonction de transfert en boucle ouverte (FBTO) augmentant alors que la phase reste inchangée, la baisse de la tension de sortie Vs conduit à une augmentation de la bande passante et une réduction de la marge de phase, jusqu'à ce que le système devienne instable.

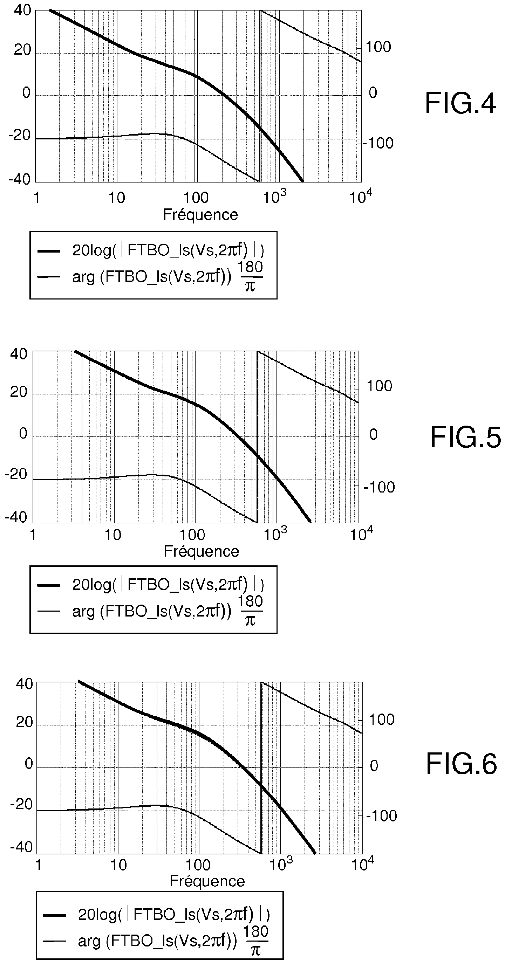

A titre d'exemple, les figures 4 à 6 présentent des diagrammes de Bode (module et phase) de la fonction de transfert en boucle ouverte d'une même structure de puissance respectivement pour un cas de tension nominale de 42V, dans le cas où la tension a chuté à 20V et dans le cas où la tension a chuté à 7V. Dans le cas où la tension de sortie est à sa valeur nominale, la structure présente une bande passante de 220Hz, une marge de gain de 15,5dB et une marge de phase de 42°. Lorsque la tension de sortie chute à 20V, la bande passante augmente au détriment des marges de stabilité. La bande passante passe à 340Hz tandis que la marge de gain et la marge de phase chute respectivement à 9dB et 22°. Dans le dernier exemple, le cas d'instabilité est atteint, les marges de phase et de gain sont nulles.

Un problème se pose donc lorsque la sortie de la structure de puissance se trouve en court-circuit ou lorsque l'amplitude de la tension de sortie est très faible. Dans ce cas la boucle de courant devient instable et une instabilité de la boucle courant de sortie se traduit par une forte oscillation du courant de sortie, donc une perte du contrôle dudit courant de sortie. Cela peut se traduire par un échauffement excessif du convertisseur, voire sa destruction.

Il est connu des convertisseurs de puissance dans lesquels la stabilisation est assurée par le circuit au primaire de la structure de puissance mais cela pose le problème du contrôle du courant de sortie depuis le circuit primaire vers le secondaire de la structure de puissance.

Un but de l'invention est notamment de corriger tout ou partie des inconvénients de l'art antérieur en proposant une solution permettant à un circuit d'alimentation d'un bus de tension continue, lorsqu'un de ces consommateurs est en défaut, d'être capable de fournir un courant continu de court-circuit suffisamment élevé pour activer la sécurité de cet utilisateur et l'isoler du réseau d'alimentation sans disjoncter ledit circuit d'alimentation ou le détruire.

A cet effet, l'invention a pour objet un convertisseur de puissance et un réseau d'alimentation tels que décrit par les revendications.

D'autres particularités et avantages de la présente invention apparaîtront plus clairement à la lecture de la description ci-après, donnée à titre illustratif et non limitatif, et faite en référence aux dessins annexés, dans lesquels :

- La figure 1, précédemment citée, illustre le principe du correcteur de facteur de puissance;

- La figure 2, précitée, représente un exemple de mode de réalisation d'une structure de puissance de type « flyback » connue de l'art antérieur ;

- La figure 3, précédemment citée, représente de façon schématique un exemple de boucle de courant secondaire connue de l'art antérieur ;

- Les figures 4 à 6, précédemment citées, représentent des diagrammes de Bode d'une même structure de puissance respectivement dans le cas d'une tension nominale de 42V et dans les cas où la tension a chuté à 20V et à 7V ;

- La figure 7 représente de façon schématique un exemple de mode de réalisation d'un convertisseur de puissance selon l'invention ;

- La figure 8 représente le diagramme de Bode d'un exemple de convertisseur de puissance selon l'invention dans le cas d'une tension nominale et d'un court-circuit en sortie.

Par la suite on désignera par le terme "consommateur" tout équipement, circuit, sous-circuit, et de façon générale tout équipement connecté au bus d'alimentation.

De même, on parlera indifféremment de « réseau de distribution continu » et de « bus continu ».

L'invention concerne un convertisseur de puissance convertissant une tension alternative en entrée en une tension continue en sortie. Comme vu précédemment, le fait de contrôler la puissance fournie par la structure de puissance et non directement son courant de sortie introduit un terme proportionnel à l'inverse de la tension de sortie dans la fonction de transfert du convertisseur de puissance. Le principe de l'invention repose sur l'utilisation d'un circuit de multiplication pour compenser le terme proportionnel à l'inverse de la tension de sortie et obtenir un circuit de conversion présentant un gain indépendant de la tension de sortie.

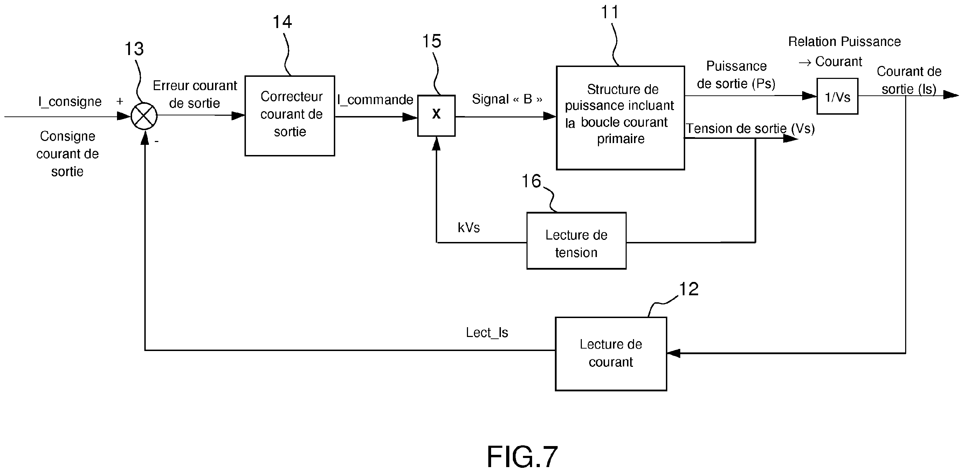

En référence à la figure 7, le convertisseur de puissance selon l'invention est réalisé autour d'une structure de puissance 11 de type PFC, ou correcteur de facteur de puissance, régulant son courant de sortie. Cette structure de puissance 11 reçoit en entrée une tension alternative et fournit en sortie une tension continue Vs. La tension d'entrée peut être monophasée ou polyphasée comme par exemple une tension alternative triphasée. La structure de puissance 11 peut, par exemple, être une structure de type flyback.

Afin de contrôler le courant de sortie Is, le convertisseur de puissance comprend une boucle de courant secondaire configurée pour asservir le courant en sortie de ce dernier. Le convertisseur de puissance comprend un module de lecture de courant 12, un additionneur 13 et un module de correction de courant 14.

Le module de lecture de courant 12 reçoit en entrée le courant de sortie de la structure de puissance 11 et sa sortie est connectée en entrée de l'additionneur 13. Ce module 12 a pour but de mesurer le courant de sortie de la structure de puissance 11. A cet effet, le module de lecture de courant 12 peut comprendre un capteur de courant configuré pour délivrer un signal lect_Is représentatif de l'amplitude du courant de sortie Is de la structure de puissance 11. Ce module 12 peut également comprendre un filtre de courant. Le capteur de courant peut par exemple être un capteur de type inductif, un capteur de tension configuré pour délivrer un signal représentatif de l'amplitude de la tension aux bornes d'une résistance en série de faible valeur ou tout autre capteur de courant connu de l'homme du métier.

L'additionneur 13 reçoit sur son entrée inverseuse, le signal lect_Is et sur l'autre entrée, un signal de consigne de courant de sortie I_consigne. Ce signal de consigne de courant permet de fixer le niveau de courant en sortie de la structure de puissance 11.

Le signal de consigne est défini par un correcteur d'une boucle de régulation de tension de sortie (non représentée) du convertisseur de puissance. Dans la boucle de tension de sortie secondaire, l'amplitude de la tension de sortie du convertisseur est mesurée et est comparée à une valeur de référence de tension prédéterminée. L'erreur obtenue est ensuite traitée pour donner la valeur de la consigne de courant de sortie. En cas de court-circuit, la consigne de courant de sortie prend une valeur fixe prédéterminée correspondant à une valeur seuil du courant de sortie. De façon avantageuse, cela permet de définir et maîtriser l'amplitude du courant de court-circuit et cela garantit que l'amplitude du courant ne sera jamais supérieur à une valeur prédéfinie afin de ne pas endommager les consommateurs connectés au réseau ou de ne pas endommager le convertisseur de puissance. En mode nominal, le signal de consigne de courant régule le courant de sortie. C'est un signal interne à la boucle de tension.

L'additionneur 13 ou comparateur est configuré pour délivrer en sortie un signal d'erreur de courant de sortie proportionnel à la différence entre la consigne de courant de sortie I_consigne et le signal de sortie du module de lecture de courant lect_Is.

Suivant un mode de réalisation préférentiel, l'additionneur 13 est un circuit analogique comme par exemple un amplificateur différentiel à gain unitaire ou tout autre circuit analogique connu de l'homme du métier.

Le module de correction de courant de sortie 14 est connecté en série entre la sortie de l'additionneur 13 et une première entrée d'un multiplieur 15 connecté en entrée de la structure de puissance 11. De façon préférentielle, le multiplieur 15 est un circuit multiplicateur analogique.

Le module de correction de courant de sortie 14 est configuré pour délivrer en sortie un signal de commande I_commande. Ce module 14 a pour but de fixer le courant absorbé par la structure de puissance 11 afin qu'il soit suffisant pour que la tension de sortie Vs de la structure de puissance ait l'amplitude requise. Suivant un mode de réalisation préférentiel, le module de correction de courant 14 est réalisé en circuit analogique. Le module de correction 14 peut être un filtre analogique à base d'amplificateur opérationnel, de résistances, de condensateurs et éventuellement de selfs.

Le convertisseur de puissance comprend un module de lecture de tension 16 connecté en sortie de la structure de puissance 11. Il est configuré pour mesurer la tension de sortie Vs de la structure de puissance et délivrer à sa sortie une tension kVs dont l'amplitude est proportionnelle à la tension de sortie Vs. Le module de lecture de tension 16 est connecté en série entre la sortie de la structure de puissance 11 et une deuxième entrée du multiplieur 15. Suivant un mode de réalisation préférentiel, le module de lecture de tension 16 est un module analogique réalisé entièrement en composant analogique. Ce module 16 peut comprendre un capteur de tension réalisé par exemple, à partir d'un amplificateur de tension à haute impédance d'entrée.

Le signal en sortie du multiplieur 15 correspond au signal de commande, précédemment nommé " B ", permettant de contrôler la puissance absorbée par la structure de puissance 11. La sortie du multiplicateur 15 est connectée à l'entrée « B » de contrôle de la structure de puissance.

Comme vu précédemment, dans ce convertisseur de puissance, on ne contrôle donc pas directement le courant de sortie, mais la puissance de sortie par l'intermédiaire du signal « B » ; De ce fait, un gain « 1/Vs » proportionnel à l'inverse de la tension de sortie apparaît dans la boucle de courant secondaire. Ce gain vient de la relation liant la puissance au courant : Ps=Vs x Is.

De façon avantageuse, l'ajout du multiplieur 15 et du module de lecture de tension 16 dans la boucle de courant secondaire permet de multiplier la fonction de transfert du circuit par le terme kVs avec k un réel non nul, et permet donc de supprimer la dépendance de la fonction de transfert du terme en 1/Vs. Le fait de multiplier la fonction de transfert par la tension de sortie Vs permet ainsi de stabiliser le circuit de conversion dans le cas d'un défaut ou d'un court-circuit d'un consommateur c'est-à-dire lorsque l'amplitude de la tension de sortie est nulle ou proche de zéro. La présence du multiplieur 15 et du module de lecture de tension 16 permet au convertisseur de puissance d'être stable dans le cas d'un court-circuit et donc de délivrer un courant de court-circuit sur le réseau capable d'activer la sécurité d'un consommateur en défaut afin de l'isoler dudit réseau et non un courant d'amplitude démesurée et non maîtrisée qui pourrait endommager le circuit de conversion ou des consommateurs.

Les équations (1) et (2) donnent l'expression des fonctions de transfert en boucle ouverte respectivement dans le cas où la boucle de tension est absente (FTBO_1) et dans le cas où la boucle de tension est présente (FTBO_2).

$$FTBO\_1 = G_{corr\_Is}(\omega) \times G_{st\_puiss}(\omega) \times (1/Vs) \times G_{lect\_Is}(\omega) \qquad (1)$$

$$FTBO\_2 = G_{corr\_Is}(\omega) \times G_{st\_puiss}(\omega) \times (1/Vs) \times G_{lect\_Is}(\omega) \times G_{lect\_Vs}(\omega) \times kVs$$
$$= G_{corr\_Is}(\omega) \times G_{st\_puiss}(\omega) \times G_{lect\_Is}(\omega) \times G_{lect\_Vs}(\omega) \times k \qquad (2)$$

Où:

$G_{corr\_Is}(\omega)$ représente le gain complexe du module de correction de courant,
$G_{st\_puiss}(\omega)$ représente le gain complexe de la structure de puissance
$G_{lect\_Is}(\omega)$ représente le gain complexe du module de lecture de courant,
$G_{lect\_Vs}(\omega)$ représente le gain complexe du module de lecture de tension,
Vs représente la tension de sortie du convertisseur et k un réel non nul.

Le multiplieur 15 multiplie la sortie du correcteur 14 de la boucle courant secondaire par une grandeur kVs proportionnelle à la tension de sortie et introduit un terme « x Vs » dans la fonction de transfert en boucle ouverte de la boucle courant secondaire. Ainsi, le terme « 1/Vs », source d'instabilité lorsque la tension de sortie est basse est annulé par le terme « x Vs " inséré au moyen du multiplieur dans la fonction de transfert en boucle ouverte, qui devient indépendante de la tension de sortie Vs.

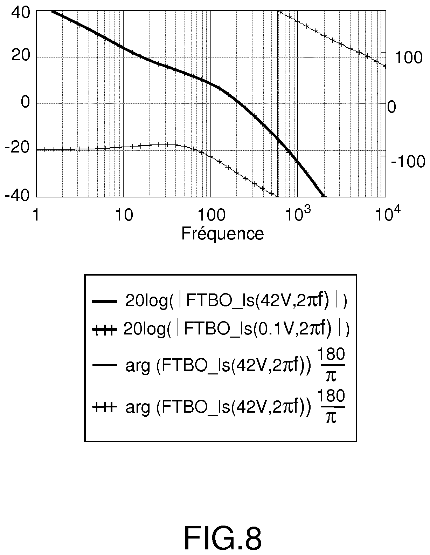

La figure 8 représente le diagramme de Bode (module et phase) d'un exemple de convertisseur de puissance selon l'invention dans le cas d'une tension nominale de 42V et d'une tension de sortie proche du court-circuit (0,1V). Les courbes représentatives du gain et de la phase restent identiques pour 42V ou 0,1V de tension de sortie. Le dimensionnement du correcteur 14 de la boucle courant secondaire et les performances de cette boucle (stabilité, rapidité) restent valables pour toute valeur de la tension de sortie, y compris en cas de court-circuit.

L'adjonction d'un terme multiplicateur Vs pour compenser le terme en 1/Vs, où Vs représente la tension de sortie du circuit de conversion, permet une régulation en puissance de sortie Ps du convertisseur, au lieu d'une régulation en courant de sortie et n'introduit aucun changement du point de vue équilibrage. L'ajout du multiplieur 15 et du module de lecture de tension 16 permet ainsi de transformer la sortie du correcteur de la boucle courant secondaire, qui est une grandeur correspondant à un courant, en une grandeur correspondant à une puissance (effet de la multiplication par la tension de sortie Vs). Cela assure la cohérence avec l'entrée " B » de la structure de puissance avec sa boucle de régulation primaire, qui est un contôle de la puissance absorbée.

Si un consommateur présente un court-circuit, la tension du réseau va chuter brutalement et l'ensemble des consommateurs vont subir un creux de tension. Le convertisseur de puissance va délivrer un courant de court-circuit d'amplitude suffisamment élevé pour activer la sécurité du consommateur en défaut et le réseau va retrouver ses pleines performances avec un niveau de stabilité absolu. De façon avantageuse, la présence du multiplieur 16 permet un retour à la tension de sortie Vs nominale de façon linéaire et sans oscillations ou paliers.

L'invention peut trouver son application dans des réseaux de distribution électrique continue ou bus d'alimentation continue. Ces réseaux peuvent, par exemple, être embarqués dans des moyens de transport terrestre, aérien ou maritime. Ces réseaux de distribution ou bus sont destinés à alimenter plusieurs consommateurs connectés audit réseau.

Ce réseau électrique ou bus peut comprendre au moins une source de tension alternative comprenant au moins une phase connecté en entrée d'un circuit de conversion d'énergie tel que décrit précédemment, la tension continue alimentant ledit réseau de distribution électrique se retrouvant aux bornes de sortie dudit circuit de conversion d'énergie. La tension alternative peut être une tension monophasée ou polyphasée comme par exemple une tension triphasée. Le réseau de distribution électrique est configuré pour alimenter une pluralité de consommateurs, chaque consommateur comprenant un dispositif de sécurité configuré pour isoler le consommateur du réseau en cas de détection d'un courant d'amplitude élevée ou courant de court-circuit. Ce dispositif de sécurité peut être par exemple un fusible, un disjoncteur ou tout autre équipement d'isolation équivalent.

De façon préférentielle, les différents modules décrits précédemment, comme le module de lecture de courant 12, l'additionneur 13, le module de correction de courant 14, le multiplieur 15 et le module de lecture de tension 16, sont réalisés uniquement à l'aide de composants analogique. Ce mode de réalisation n'est nullement limitatif et tout ou partie d'un ou plusieurs modules peuvent être réalisé à l'aide de circuits numérique par exemple dans le cas d'une utilisation pour un réseau électrique destiné à un domaine autre que l'avionique.

## Revendications

1.  Convertisseur de puissance comportant une structure de puissance (11) du type correcteur de facteur de puissance (PFC) régulant son courant de sortie, ladite structure de puissance (11) comportant une entrée destinée à recevoir une tension d'entrée alternative comprenant au moins une phase, et une sortie délivrant une tension continue (Vs), ledit convertisseur de puissance comportant une boucle de régulation en tension comprenant un circuit correcteur, **caractérisé en ce qu'**il comprend une boucle de courant secondaire configurée pour asservir le courant en sortie du convertisseur de puissance, ladite boucle de courant secondaire comportant un multiplieur (15) configuré pour contrôler la puissance de sortie (Ps) délivrée par la structure de puissance (11), ledit multiplieur (15) comportant une entrée destinée à recevoir un signal de commande en courant (I_commande) et une entrée destinée à recevoir un signal proportionnel à une mesure (16) de la tension de sortie de la structure de puissance (11), ainsi qu'un module de correction de courant (14) comportant une sortie configurée pour générer et délivrer ledit signal de commande en courant (I_commande); ledit module de correction de courant (14) comportant une entrée destinée à recevoir un signal proportionnel à la différence entre une mesure (12) du courant de sortie (Lect_Is) de la structure de puissance (11) et un signal de consigne de courant de sortie (I_consigne) délivré par le circuit correcteur de la boucle de régulation en tension, le signal de consigne (I_consigne) prenant une valeur fixe prédéterminée en cas de fonctionnement sur court-circuit en sortie.

2.  Convertisseur de puissance selon la revendication précédente comprenant :

    - un module de lecture de courant (12) connecté en série entre la sortie de la structure de puissance (11) et un additionneur (13), ledit additionneur (13) recevant sur une deuxième entrée une consigne de courant de sortie (I_consigne) prédéterminée, ledit module de lecture de courant (12) étant configuré pour délivrer en sortie un signal (lect_Is) représentatif de l'amplitude du courant de sortie (Is) de la structure de puissance (11) et ledit additionneur (13) étant configuré pour délivrer en sortie un signal proportionnel à la différence entre la consigne de courant et le signal de sortie du module de lecture de courant,
    - un module de correction de courant (14) connecté en série entre la sortie de l'additionneur (13) et une première entrée d'un multiplieur (15), ledit multiplieur (15) étant connecté en entrée de la structure de puissance (11),

- un module de lecture de tension (16) connecté en série entre la sortie de la structure de puissance (11) et une deuxième entrée du multiplieur (15), ledit module de lecture de tension (16) étant configuré pour mesurer la tension de sortie (Vs) de la structure de puissance (11) et délivrer sur la deuxième entrée du multiplieur (15), ladite tension continue (Vs).

3. Convertisseur de puissance selon une des revendications précédentes dans lequel ledit circuit de conversion d'énergie est un circuit analogique.

4. Convertisseur de puissance selon une des revendications précédentes dans lequel la structure de puissance (11) est adaptée pour recevoir en entrée une tension triphasée.

5. Réseau électrique **caractérisé en ce qu'**il comprend un convertisseur de puissance selon une des revendications précédentes et au moins une source de tension alternative, ledit convertisseur de puissance comportant une entrée connectée à ladite source de tension alternative et une sortie délivrant une tension continue alimentant ledit réseau, une pluralité de consommateurs étant connectée audit réseau électrique, chaque consommateur comprenant un dispositif de sécurité configuré pour isoler, en cas de court-circuit, ledit consommateur du réseau.

**Patentansprüche**

1. Leistungswandler, welcher eine Leistungsstruktur (11) vom Typ Leistungsfaktorkorrektur (PFC) beinhaltet, welche ihren Ausgangsstrom reguliert, wobei die Leistungsstruktur (11) einen Eingang beinhaltet, welcher dazu bestimmt ist, eine Wechselspannung aufzunehmen, welche mindestens eine Phase beinhaltet, und einen Ausgang, welcher eine Gleichspannung (Vs) abgibt, wobei der Leistungswandler eine Spannungs-Regelungsschleife beinhaltet, welche einen Korrekturschaltkreis beinhaltet,
**dadurch gekennzeichnet, dass** er eine Sekundärstromschleife beinhaltet, welche konfiguriert ist, um den Strom am Ausgang des Leistungswandlers nachzuführen, wobei die Sekundärstromschleife einen Multiplizierer (15) beinhaltet, welcher konfiguriert ist, um die Ausgangsleistung (Ps) zu steuern, welche durch die Leistungsstruktur (11) abgegeben wird, wobei der Multiplizierer (15) einen Eingang beinhaltet, welcher dazu bestimmt ist, ein Strom-Steuersignal (I_commande) zu empfangen und einen Eingang, welche dazu bestimmt ist, ein Signal zu empfangen, welches sich proportional zu einem Messwert (16) der Ausgangsspannung der Leistungsstruktur (11) verhält, sowie ein Stromkorrekturmodul (14), welches einen Ausgang beinhaltet, welcher konfiguriert ist, um das Strom-Steuersignal (I_commande) zu erzeugen und abzugeben; wobei das Stromkorrekturmodul (14) einen Eingang besitzt, welcher dazu bestimmt ist, ein Signal zu empfangen, welches sich proportional zur Differenz zwischen einem Messwert (12) des Ausgangsstroms (Lect_Is) der Leistungsstruktur (11) und einem Ausgangsstrom-Sollwertsignal (I_consigne) verhält, welches durch den Korrekturschaltkreis der Spannungsregelungsschleife abgegeben wird, wobei das Sollwertsignal (I_consigne) einen vorbestimmten festen Wert bei Betrieb mit Kurzschluss am Ausgang annimmt.

2. Leistungswandler nach dem vorhergehenden Anspruch, Folgendes beinhaltend:

- ein Stromlesemodul (12), welches in Reihe zwischen dem Ausgang der Leistungsstruktur (11) und einem Summierer (13) angeschlossen ist, wobei der Summierer (13) an einem zweiten Eingang einen vorbestimmten Ausgangsstrom-Sollwert (I_consigne) empfängt, wobei das Stromlesemodul (12) konfiguriert ist, um am Ausgang ein Signal (lect_ls) abzugeben, welches die Amplitude des Ausgangsstroms (ls) der Leistungsstruktur (11) darstellt, und der Summierer (13) konfiguriert ist, um am Ausgang ein Signal abzugeben, welches sich proportional zur Differenz zwischen dem Stromsollwert und dem Ausgangssignal des Stromlesemoduls verhält,
- ein Stromkorrekturmodul (14), welches in Reihe zwischen dem Ausgang des Summierers (13) und einem ersten Eingang eines Multiplizierers (15) angeschlossen ist, wobei der Multiplizierer (15) am Eingang der Leistungsstruktur (11) angeschlossen ist,
- ein Spannungslesemodul (16), welches in Reihe zwischen dem Ausgang der Leistungsstruktur (11) und einem zweiten Eingang des Multiplizierers (15) angeschlossen ist, wobei das Spannungslesemodul (16) konfiguriert ist, um die Ausgangsspannung (Vs) der Leistungsstruktur (11) zu messen und an den zweiten Ausgang des Multiplizierers (15) die Gleichspannung (Vs) abzugeben.

3. Leistungswandler nach einem der vorhergehenden Ansprüche, bei welchem der Energiewandlungsschaltkreis ein Analogschaltkreis ist.

4. Leistungswandler nach einem der vorhergehenden Ansprüche, bei welchem die Leistungsstruktur (11) geeignet ist, am Eingang eine Dreiphasenspannung aufzunehmen.

5. Stromnetz, **dadurch gekennzeichnet, dass** es einen Leistungswandler nach einem der vorhergehenden Ansprüche und mindestens eine Wechselspannungsquelle beinhaltet, wobei der Leistungswandler einen Eingang besitzt, welcher mit der Wechselspannungsquelle verbunden ist, und einen Ausgang, welcher eine Gleichspannung abgibt, welche das Netz speist, wobei eine Vielzahl von Verbrauchern an das Stromnetz angeschlossen ist, wobei jeder Verbraucher eine Sicherheitsvorrichtung beinhaltet, welche konfiguriert ist, im Falle eines Kurzschlusses den Verbraucher gegen das Netz zu isolieren.

**Claims**

1. A power converter comprising a power structure (11) of power factor corrector (PFC) type regulating its output current, said power structure (11) having an input for receiving, as input, an AC voltage comprising at least one phase and delivering, as output, a DC voltage (Vs), said power converter comprising a voltage regulation loop comprising a corrector circuit,
   **characterized in that** it comprises a secondary current loop configured to track the output current of the power converter, said secondary current loop comprising a multiplier (15) configured to control the output power delivered by the power structure (11), said multiplier (15) comprising an input for receiving a current control signal (I_commande) and an input for receiving a signal proportional to a measurement (16) of the output voltage of the power structure (11), as well as a current correction module (14) comprising an output configured to generate and deliver said current control signal (I_commande); said current correction module (14) comprising an input for receiving a signal proportional to a difference between a measurement (12) of the output current (Lect_Is) of the power structure (11) and an output current setpoint signal (I_consigne) delivered by the corrector circuit of the voltage regulation loop, the setpoint signal (I_consigne) taking a predetermined fixed value in the event of output short circuit operation.

2. The power converter as claimed in the preceding claim, comprising:

   - a current read module (12) connected in series between the output of the power structure (11) and an adder (13), said adder (13) receiving, on a second input, a predetermined output current setpoint (I_consigne), said current read module (12) being configured to deliver, as output, a signal (lect_Is) representative of the amplitude of the output current (Is) of the power structure (11) and said adder (13) being configured to deliver, as output, a signal proportional to the difference between the current setpoint and the output signal of the current read module,
   - a current correction module (14) connected in series between the output of the adder (13) and a first input of a multiplier (15), said multiplier (15) being connected to the input of the power structure (11);
   - a voltage read module (16) connected in series between the output of the power structure (11) and a second input of the multiplier (15), said voltage read module (16) being configured to measure the output voltage (Vs) of the power structure (11) and to deliver, on the second input of the multiplier (15), said DC voltage (Vs).

3. The power converter as claimed in one of the preceding claims, in which said energy conversion circuit is an analog circuit.

4. The power converter as claimed in one of the preceding claims, in which the power structure (11) is capable of receiving, as input, a three-phase voltage.

5. An electrical network **characterized in that** it comprises a power converter as claimed in one of the preceding claims and at least one AC voltage source, said power converter having an input connected to said AC voltage source and an output delivering a DC voltage supplying said network, a plurality of consumers being connected to said electrical network, each consumer comprising a safety device configured to isolate said consumer, in case of a short circuit, from the network.

Courant ----▶

Tension ▲                PFC        ▲ Tension de sortie
                                      continue régulée

FIG.1

FIG.2
(ART ANTERIEUR)

EP 3 304 240 B1

Relation Puissance
→ Courant

Consigne courant
de sortie

(issue de la régulation
tension de sortie en mode
nominal)

Erreur courant
de sortie

+

-

Correcteur
courant de
sortie

Terme « B »

Structure de
puissance incluant
la boucle courant
primaire

Puissance
de sortie

1/Vs

Courant  de
sortie

Mesure courant de sortie

Capteur
de
courant

EP 3 304 240 B1

FIG.3
(ART ANTERIEUR)

FIG.4

FIG.5

FIG.6

FIG.7

EP 3 304 240 B1

FIG.8

**RÉFÉRENCES CITÉES DANS LA DESCRIPTION**

**Documents brevets cités dans la description**

- US 5969962 A